# EUROPEAN PATENT APPLICATION

(11) **EP 1 036 531 A1**
(43) Date of publication of application: **20.09.2000**
(21) Application number: 00830203.6
(22) Date of filing: 17.03.2000
(51) Int. Cl.: A47J 47/00

(54) **Chopping board with removable cutting surface**

(30) Priority: 18.03.1999 IT BS990021 U
(71) Applicant: Glofis S.r.l., 20142 Milano (IT)
(72) Inventor: Polli, Andrea, 20122 Milano (IT)
(74) Representative: Manzoni, Alessandro

(57) **Abstract**

This invention concerns a chopping board for cutting operations of various materials, consisting of a support base (11). On at least one covered surface of said support base, there is placed a cutting surface (12, 12'), either single-layer or multi-layered, where the layer or layers are removable once they become worn in such a way as to renew the chopping surface.

## Description

This invention concerns, in particular, work surfaces for the food industries, such as butchers, fishmongers, restaurants, delicatessens, etc., although not excluding its application to domestic chopping boards.

The continuous use of work surfaces for cutting, in the preparation of meat, fish, vegetables, etc., causes them to become worn and this leads to problems of hygiene. In fact, the surfaces of these work tops is cut by the cutting utensils and these cuts become home to unwanted bacteria, which the usual washing procedures often cannot remove.

At present, the classic method adopted by operators in this sector is to buy and use ground polyethylene sheets as cutting surfaces; these can be removed and/or exchanged and then disposed of.

The aims of this invention are achieved by equipping a work surface, which may be made in polyethylene or other material, with at least one cutting surface, firmly fastened and removable once the surface is worn.

There are numerous advantages to this version of the invention, among which:
- a guaranteed improvement in the hygiene level;
- the possibility for even small-scale operators to observe the hygiene norms;
- reduced running costs compared to traditional maintenance systems;
- freeing operators from their dependence on companies specialised in the usual grinding of work surfaces, considering that these are few and far between; and last but not least,
- the possibility for operators to act promptly and independently to remove an excessive bacterial presence. The enclosed drawings, which are illustrative but not binding, show various practical models of the invention.

In said designs:
Fig. 1 shows a chopping board with a cutting surface ready for use;
Fig. 2 shows the chopping board while the cutting surface is being removed for substitution;
Fig. 3 shows a new cutting surface being applied to the chopping board;
Figs 4 and 5 show two versions of a chopping board with a variety of removable cutting surfaces or strata, on one side and opposite sides, respectively.

In accordance with the invention, a chopping board 11 is, therefore, equipped with at least one removable cutting surface 12, which represents the real working surface.

The chopping board may have any shape and size, being formed of a polyethylene support base, although not excluding the use of other materials.

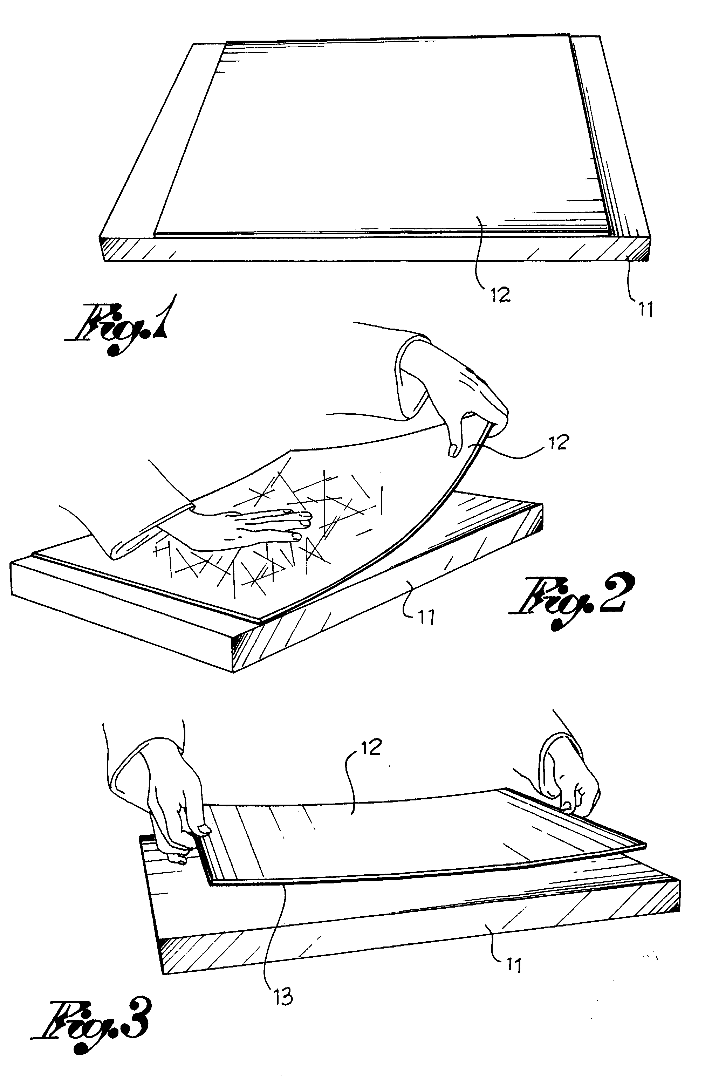

In the version in Figs 1 - 3, the cutting surface 12 consists, essentially, of a plastic sheet, designed for use in the food industry, with precise structural and mechanical characteristics, even though this does not exclude the use of any other material that may be suitable for the purpose.

The sheet used to make the cutting surface 12 has an adhesive layer 13 on the back side, chosen from those currently available on the market. The adhesive 13 is designed to hold the cutting surface 12 firmly to the chopping board 11, to withstand the deformation of the cutting surface due to the cuts and blows from the knife, and to prevent substances from penetrating between the chopping board 11 and the cutting surface 12.

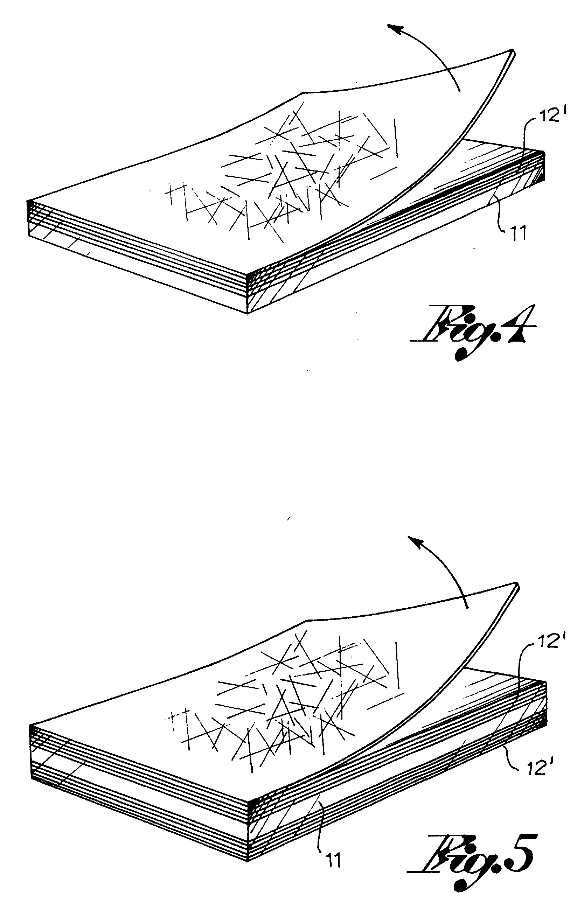

In all cases, the cutting surface can be detached from the chopping board - Fig. 2 - for replacing.

During the detaching operation, the adhesive must remain stuck to the cutting surface, thereby leaving the chopping board clean and ready to receive the new cutting surface - Fig. 3.

If required, the cutting surface may be embedded in a housing or recess made in the chopping board, in such a way as to be held by the surrounding frame.

The cutting surface may also be held in place by other suitable means, other than glue, provided that they come away easily at the moment of substitution.

The thickness of the cutting surface will depend on the material from which it is made and its resistance to the knife blade. However, this thickness will be chosen in such a way that the cutting surface can be substituted should the depth of the cut compromise the hygiene of the chopping board and , with it, the possibility of cleaning the surface with the usual anti-bacterial treatment. For example, the ideal thickness of the cutting surface should be between 2 - 5 mm, which limits the amount of material used and avoids unnecessary wastage.

The aims and the advantages mentioned above can also be achieved, without leaving the field of the invention, with a multi-layered cutting surface, as shown in Figs 4 and 5. In this case, one or both sides of the chopping board 11 have two, three or more layers 12', laid on top of each other, equivalent to the cutting surface in Figs 1 - 3. Each layer 12' is held by adhesive to the layer below and, once it becomes worn, it can be detached and removed to reveal the underlying layer as the new cutting surface (see Fig. 4). In the cases shown in Figs 4 and 5, the various overlaid layers 12' may be held together not only by the interposition of an adhesive, but also by the use of other fastening means, such as heat-sealing the edges, or the application of a sheath in thermoadhesive or thermoshrinking material, which functions as a protective barrier around the layers and as a means of assembly.

## Claims

1. Chopping board for cutting various materials, consisting of a support base (11) and characterised by at least one face covered by at least one cutting surface (12, 12'), functioning as a removable work surface after suffering wear and tear, in order to provide a new chopping surface.

2. Chopping board according to claim 1, characterised by at least one single-layer cutting surface (12), securely fastened to at least one face of said support base and removable for its substitution by another cutting surface, once it has become worn.

3. Chopping board according to claim 2, in which the cutting surface (12) is fixed to the support base (11) by means of interposing a glue, which may be adhesive on both sides, but which will not prevent the surface from being detached.

4. Chopping board according to claim 2, in which the cutting surface (12) is fixed to the support base (11) with mechanical means and in a removable way.

5. Chopping board according to claim 2, in which the cutting surface (12) is embedded in the support base (11) and held by the surrounding frame or mechanical means.

6. Chopping board according to any of the previous claims, in which the support base (11) is a thick polyethylene one and the cutting surface (12) consists of at least one polyethylene sheet of a lesser thickness.

7. Chopping board according to any of the claims from 2 to 5, in which the support base is made of a first material and the cutting surface is made of a second material.

8. Chopping board according to claim 1, characterised by at least one cutting surface made up of various layers (12'), overlaid in a pack, fixed to each other and removable one at a time, starting from the top, to reveal the layer below which can be used once the previous layer has become worn.

9. Chopping board according to claim 8, in which a multi-layered cutting surface (12') is fixed to both faces of the support base (11).

10. Chopping board according to either claim 8 or 9, in which the layers of each multi-layered cutting surface are fastened temporarily with the interposition of an adhesive and, if necessary, the use of an additional border device, said border device being either welding of the edges or a sheath of thermoadhesive or thermoshrinking material.
